# DEMANDE DE BREVET EUROPEEN

(11) **EP 1 460 395 A1**
(43) Date de publication de la demande: **22.09.2004**
(21) Numéro de dépôt: 03291497.0
(22) Date de dépôt: 19.06.2003
(51) Int. Cl.: G01F 15/00, F16K 3/08

(54) **Installation de réglage de débit de distribution de fluides**

(30) Priorité: 18.03.2003 FR 0303576
(71) Demandeur: GCE SAS, 58400 La Charité sur Loire (FR)
(72) Inventeur: Rousselin, Guy, 18140 Herry (FR)
(74) Mandataire: Debay, Yves

(57) **Abrégé**

La présente invention concerne une installation de réglage du débit de distribution de fluides comprenant un corps pourvu d'un conduit d'arrivée du fluide débouchant, à une extrémité en vis à vis d'un disque métallique entraîné en rotation par des moyens et percé de trous de dimensions précises dont toujours au moins un est en vis à vis d'un conduit de sortie contenu dans le corps, quelle que soit la position du disque, pour permettre une distribution de fluide sans risque d'interruption même pendant le réglage du débit et un réglage progressif du débit en fonction du diamètre des trous et ou de la densité des trous en vis à vis du conduit de sortie.

## Description

La présente invention concerne une installation de réglage du débit de distribution de fluides.

Il est connu des installations de réglage du débit de distribution de fluides dans lesquelles le conduit d'arrivée du fluide débouche sur un disque percé d'une rangée de trous de diamètres croissants pouvant être placés successivement face au conduit d'arrivée du fluide grâce à un bouton moleté permettant une augmentation discrète et discontinue du débit du fluide. Ce mode de réalisation ne permet pas une augmentation continue, progressive et présente un risque d'interruption du débit lorsque aucun des trous du disque ne fait face au conduit d'arrivée du fluide. Ceci est un inconvénient majeur lorsque le fluide dont le débit doit être distribué est un fluide vital pour un être vivant.

Le but de l'invention est de proposer un système de réglage de débit présentant l'avantage de permettre un réglage du débit plus progressif et ne présentant aucun risque d'interruption du débit.

Ce but est atteint par le fait que l'installation de réglage du débit de distribution de fluides comprend un corps pourvu d'un conduit d'arrivée du fluide débouchant, à une extrémité en vis à vis d'un disque métallique entraîné en rotation par des moyens et percé de trous dont toujours au moins un est en vis à vis d'un conduit de sortie contenu dans le corps, quelle que soit la position du disque pour permettre une distribution de fluide sans risque d'interruption même pendant le réglage du débit et un réglage progressif du débit en fonction du diamètre du ou des trous et ou de la densité des trous en vis à vis du conduit de sortie.

Selon une autre particularité, le disque est percé d'au moins deux rangées concentriques de trous de dimensions précises et dont les trous de chaque rangée sont disposés selon un pas angulaire régulier et sont décalés angulairement par rapport aux trous de l'autre rangée, le diamètre des trous rencontrés successivement dans un sens de rotation donné variant progressivement pour chaque trou successif appartenant à deux rangées différentes et adjacent angulairement, l'espacement des trous successifs de deux rangées étant inférieur aux diamètres des conduits d'arrivée et de sortie du fluide dans le corps, le conduit de sortie ou d'arrivée du fluide faisant face à plusieurs trous du disque associé à des moyens d'entraînement pour permettre un réglage progressif du débit sans risque d'interruption du débit du fluide.

Selon une autre particularité, le disque comporte une seule découpe continue sur un secteur angulaire et à axe de symétrie circulaire dont la largeur varie progressivement avec l'angle du rayon d'intersection de la découpe.

Selon une autre particularité, le moyen d'entraînement est un bouton tournant dans le corps et solidaire en rotation du disque métallique afin de permettre sa rotation pour régler le débit, un perçage dans le bouton permettant la circulation du fluide jusqu'aux trous de précision du disque métallique de réglage du débit du fluide.

Selon une autre particularité, un perçage dans une partie inférieure du corps constitue le conduit de sortie du fluide dont le diamètre est supérieur à l'espacement entre au moins deux trous de précision d'une même rangée du disque afin d'assurer que le conduit de sortie est toujours en face d'au moins deux trous de précision du disque métallique de réglage du débit.

Selon une autre particularité, l'étanchéité de l'installation est assurée par des joints toriques disposés dans des gorges formées d'une part sur la périphérie de la surface cylindrique du bouton, d'autre part sur la surface périphérique interne de la jupe du bouton et respectivement les parties inférieure et supérieure du corps contenant le conduit d'arrivée et respectivement le conduit de sortie et enfin par un joint disposé dans un perçage de plus grand diamètre que le conduit de sortie du fluide.

Selon une autre particularité, l'étanchéité est assurée par deux joints toriques disposés l'un entre le disque et le conduit de sortie et l'autre entre le disque et le conduit d'entrée, tous les deux dans des perçages de plus grand diamètre que leur conduits respectifs et en vis à vis du ou des trous et de l'un et de l'autre.

Selon une autre particularité, le bouton tournant est moleté sur sa périphérie extérieure et saillant sur au moins une face du corps pour permettre son entraînement manuel.

Selon une autre particularité, le corps est réalisé en deux pièces en matière plastique moulées, enserrant au moins partiellement le bouton et le disque.

Selon une autre particularité, le disque est de diamètre inférieur au bouton.

Selon une autre particularité, les orifices en vis à vis du disque sont en vis à vis d'au moins deux trous.

D'autres particularités et avantages de la présente invention apparaîtront plus clairement à la lecture de la description ci-après faite en référence aux dessins annexés dans lesquels:
- les figures 1a, 1b, 1c représentent respectivement une vue en coupe, une vue de dessus et une vue de face de l'ensemble du dispositif de réglage de débit selon l'invention, constitué du bouton moleté et des parties de corps constituant l'arrivée et la sortie des fluides;
- la figure 2 représente en vue de dessus le disque métallique de réglage de débit de distribution de fluides selon l'invention;
- la figure 3 représente en vue de dessus le disque métallique de réglage de débit de distribution de fluides selon une variante de l'invention avec une seule découpe continue sur un secteur angulaire et à axe de symétrie circulaire dont la largeur varie progressivement avec l'angle du rayon d'intersection de la découpe.
- les figures 4a, 4b, 4c représentent respectivement une vue en coupe, une vue de profil et une vue de dessus du bouton moleté;
- les figures 5a, 5b représentent respectivement une vue de dessous et une vue en coupe de la partie supérieure du corps constituant l'arrivée du fluide;
- les figures 6a, 6b représentent respectivement une vue de dessus et une vue en coupe de la partie inférieure du corps constituant la sortie du fluide;
- les figures 7a et 7b représentent respectivement une vue de dessus et une vue en coupe d'une variante de l'invention avec le disque entre les joints toriques des conduits d'entrée et de sortie.

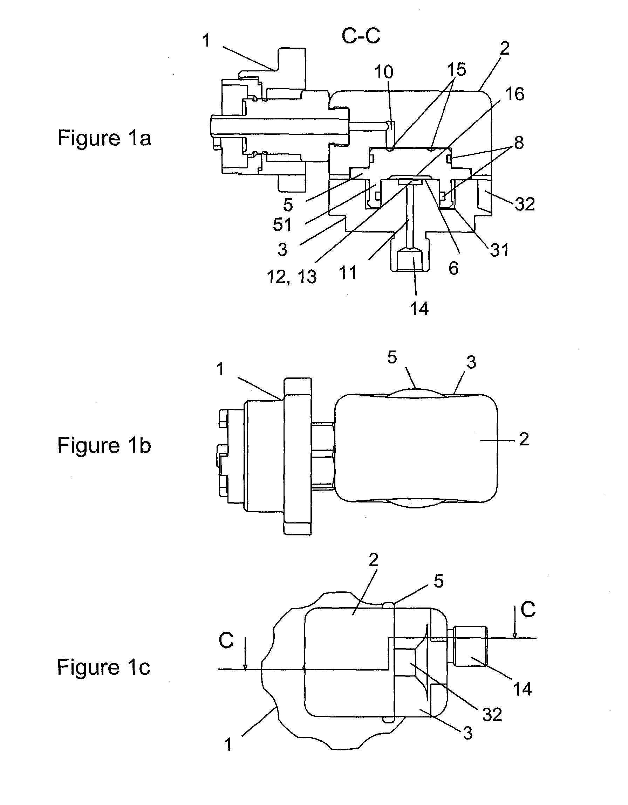

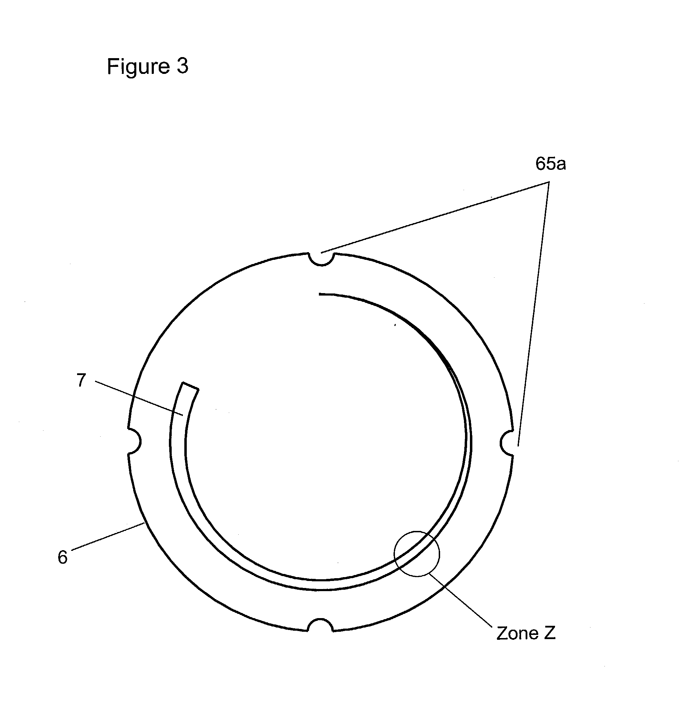

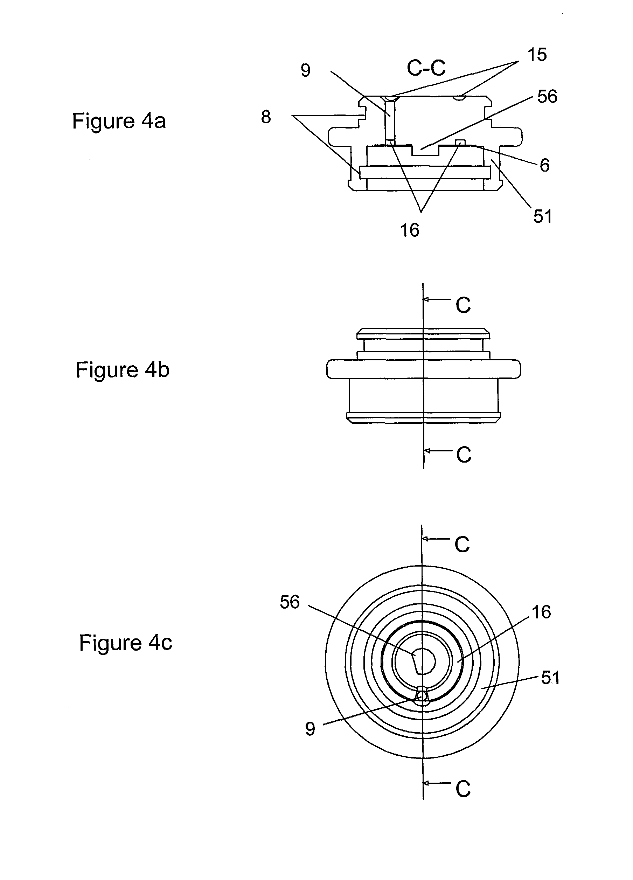

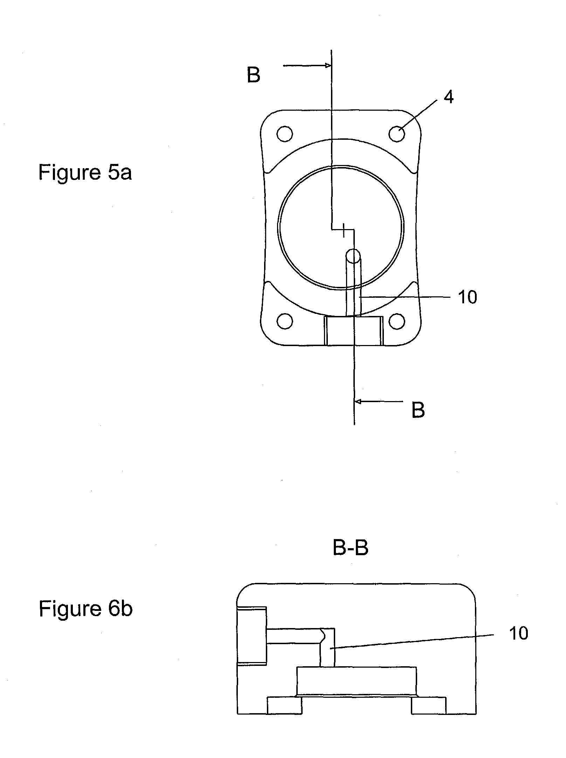

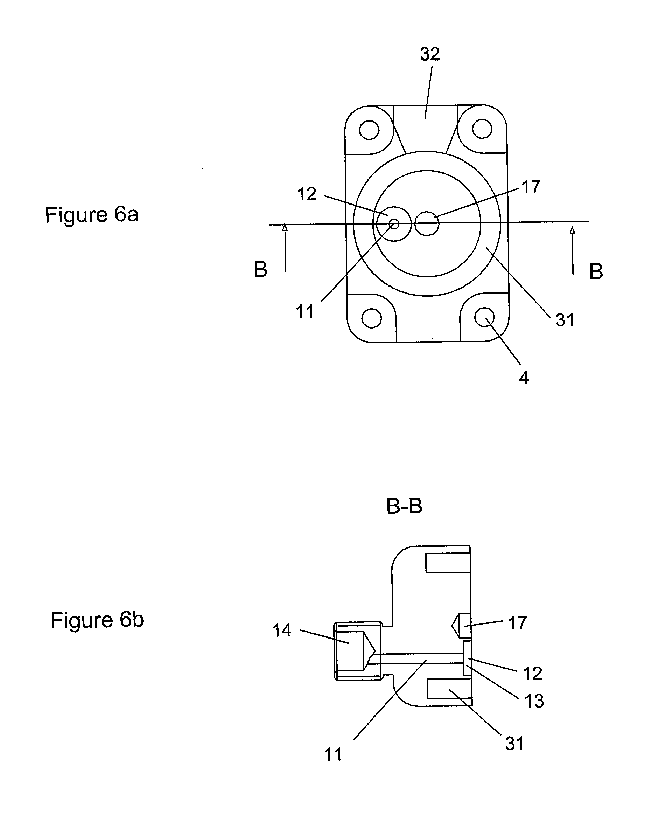

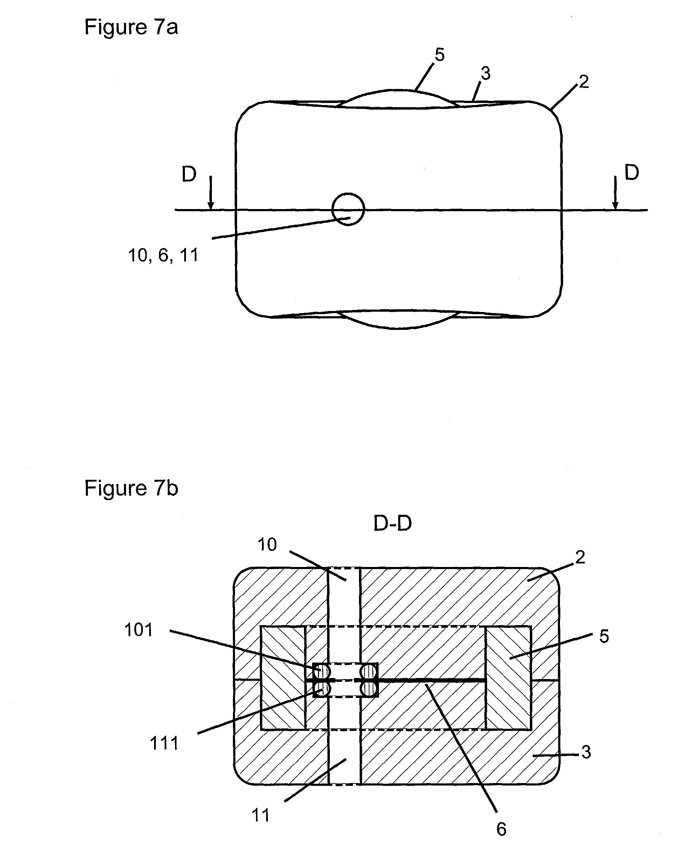

L'invention va maintenant être décrite en liaison avec les figures 1 à 7. L'invention consiste en un dispositif de réglage du débit de distribution de fluides. Une telle installation comporte un adaptateur (1, fig.1a) permettant le montage sur des sources de gaz et débouchant sur une partie supérieure d'un corps constituant l'arrivée du fluide (2), par exemple rectangulaire fixé à une partie inférieure du corps constituant la sortie du fluide (3) de mêmes dimensions par des vis en ses quatre coins (4), par clipsage, collage ou soudage. Un bouton (5) cylindrique, moleté sur la périphérie du cylindre, est monté solidaire en rotation d'un disque métallique (6) de réglage du débit percé de, par exemple, deux rangées (70, 71) de trous (70₀-70ₙ et 71₀-71ₙ) de précision de diamètres croissants. Dans l'exemple de réalisation la croissance du diamètre des trous d'une rangée (70) est obtenue avec un incrément qui permet d'intercaler les diamètres des trous de l'autre rangée (71). La solidarisation du bouton (5) avec le disque est réalisée par une forme (56) complémentaire à une découpe (65, 65a) réalisée sur le disque, ou vice versa. Le montage en rotation du bouton (5) moleté par rapport au corps est obtenu par un perçage (17) dans le corps, dans lequel s'insère la forme (56) du bouton moleté, ou vice versa et par un prolongement en jupe (51) de la face, par exemple inférieure du bouton coopérant avec une gorge de forme complémentaire (31) réalisée dans la partie du corps en vis à vis de la face du bouton sur laquelle la jupe est formée. Sur une des faces du corps en vis à vis de la face du bouton sur laquelle la jupe est formée, une encoche (32) permet par exemple la visibilité de la jupe du bouton moleté et la lecture du débit. Le bouton moleté est monté de façon étanche entre les corps d'arrivée (2) et de sortie (3) du fluide grâce à des joints toriques disposés dans chaque gorge ménagée dans le bouton moleté (8) de part et d'autre des gorges de circulation (15, 16) formées sur chaque face supérieure et inférieure du bouton moleté. Le bouton (5) moleté est percé d'un conduit (9) débouchant sur les deux gorges de circulation (15 et 16) permettant la circulation du fluide entre le conduit d'arrivée (10) et les trous (70, 71) de précision du disque métallique de réglage du débit faisant face au conduit (11) de sortie du fluide. Le conduit de sortie du fluide (11) consiste en un perçage dans une partie inférieure du corps de sortie du fluide (3) et débouche sur le disque (6) de réglage du débit par un perçage de plus grand diamètre (12) dans lequel est disposé un joint (13) assurant l'étanchéité entre le disque (6) et le conduit de sortie (11), tout en ménageant un passage de diamètre suffisant pour mettre en correspondance une zone Z du disque avec le conduit (11). Le conduit de sortie du fluide (11) débouche sur une prise pour tuyau de distribution de fluides (14).

Dans une première variante de réalisation de l'invention, la taille des trous en vis à vis de la zone Z de passage vers le conduit de sortie augmente progressivement.

Dans une seconde variante de réalisation, les trous conservent un diamètre constant mais leur densité en vis à vis de la zone Z varie progressivement.

Dans une troisième variante de réalisation, le diamètre et la densité des trous varient.

Dans une quatrième variante, le disque (6) comporte une seule découpe (7) continue sur un secteur angulaire et à axe de symétrie circulaire dont la largeur varie progressivement avec l'angle du rayon d'intersection de la découpe, de sorte que la surface en vis à vis avec la zone Z varie progressivement.

Dans une dernière variante, le disque (6) est serré entre les joints toriques (101, 111) des conduits d'arrivée (10) et de sortie (11), les joints (101, 111) étant en vis à vis des trous ou de la découpe et de l'un et de l'autre.

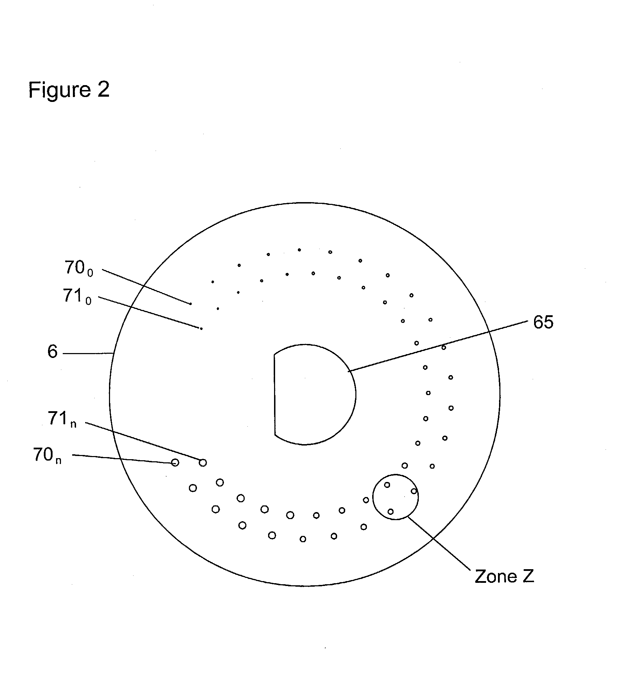

La zone Z est détaillée sur la figure 2 et fait apparaître que plusieurs trous d'une même rangée et/ou de rangées différentes sont toujours en vis-à-vis de la zone. La zone a donc une dimension minimale correspondant à l'intervalle maximum qui sépare deux trous quelle que soit la direction dans laquelle ils sont situés.

En fonctionnement, le fluide est acheminé par le conduit d'arrivée (10) débouchant sur une gorge (15) ménagée dans le bouton moleté permettant la circulation du fluide jusqu'au conduit dans le bouton moleté débouchant sur une gorge (16) de l'autre côté du bouton moleté, faisant face aux deux rangées de trous de précision (70, 71) du disque métallique de réglage du débit (6) sur lequel débouche le conduit de sortie du fluide (11). L'étanchéité entre le bouton moleté (5) et les corps d'arrivée (2) et de sortie (3) du fluide est assurée de part et d'autre (8) du conduit dans le bouton moleté de façon à ce que le fluide ne circule qu'à travers celui-ci. Le diamètre du bouton moleté (5) est supérieur à la largeur des corps d'arrivée (2) et de sortie (3) de façon à permettre à l'utilisateur la rotation du bouton moleté(5), solidaire du disque de réglage (6), afin de régler le débit du fluide en plaçant plusieurs trous de précision de différents diamètres (70, 71) en face du conduit de sortie du fluide (11), dont le diamètre est supérieur à l'espacement entre deux trous de précision du disque.

On comprend que l'on a ainsi réalisé un dispositif de réglage de débit de distribution de fluides permettant un réglage progressif sans risque d'interruption du débit du fluide.

Les étanchéités réalisées avec des joints toriques et un joint JF4 n°2 disposés dans des gorges peuvent être remplacées par tout autre système d'étanchéité satisfaisant aux conditions d'utilisation sans pour autant sortir de l'esprit de l'invention.

Dans une autre variante de réalisation la densité des trous augmente progressivement.

Dans une variante supplémentaire le diamètre et la densité des trous augmentent.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Installation de réglage du débit de distribution de fluides comprenant un corps (2) pourvu d'un conduit d'arrivée du fluide (10) débouchant, à une extrémité en vis à vis d'un disque métallique (6) entraîné en rotation par des moyens et percé de trou(s) (7, 70, 71) dont toujours au moins un est en vis à vis d'un conduit de sortie (11), quelle que soit la position du disque (6), le corps (3) comportant le conduit de sortie du fluide, pour permettre une distribution de fluide sans risque d'interruption même pendant le réglage du débit et un réglage progressif du débit en fonction du diamètre du ou des trous (70, 71) et ou de la densité des trous en vis à vis du conduit de sortie.

2. Installation de réglage du débit de distribution de fluides selon la revendication 1, **caractérisée en ce que** le disque (6) comporte une seule découpe (7) continue sur un secteur angulaire et à axe de symétrie circulaire dont la largeur varie progressivement avec l'angle du rayon d'intersection de la découpe.

3. Installation de réglage du débit de distribution de fluides selon la revendication 1, **caractérisée en ce qu'**au moins deux rangées concentriques de trous (70, 71) de dimensions précises et dont les trous de chaque rangée sont disposés selon un pas angulaire régulier et décalés angulairement par rapport aux trous de l'autre rangée, le diamètre des trous rencontrés successivement dans un sens de rotation donné variant progressivement pour chaque trou successif appartenant à deux rangées différentes et adjacent angulairement, l'espacement des trous successifs de deux rangées étant inférieur aux diamètres des conduits d'arrivée (10) et de sortie (11) du fluide dans le corps (2, 3), le conduit de sortie ou d'arrivée du fluide faisant face à plusieurs trous du disque associé à des moyens d'entraînement pour permettre un réglage progressif du débit sans risque d'interruption du débit du fluide.

4. Installation de réglage du débit de distribution de fluides selon une des revendications précédentes, **caractérisée en ce que** le moyen d'entraînement est un bouton (5) tournant dans le corps (2, 3) et solidaire en rotation du disque métallique (6) afin de permettre sa rotation pour régler le débit, un perçage dans le bouton permettant la circulation du fluide jusqu'aux trous (70, 71) ou la découpe (7) de précision du disque métallique de réglage du débit du fluide.

5. Installation de réglage du débit de distribution de fluides selon une des revendications précédentes, **caractérisée en ce qu'**un perçage dans une partie inférieure du corps (3) constitue le conduit de sortie du fluide (11) dont le diamètre est supérieur à l'espacement entre au moins deux trous de précision d'une même rangée du disque (6) afin d'assurer que le conduit de sortie (11) est toujours en face d'au moins deux trous de précision du disque métallique de réglage du débit.

6. Installation de réglage du débit de distribution de fluides selon une des revendications précédentes, **caractérisée en ce que** l'étanchéité de l'installation est assurée par des joints toriques (8) disposés dans des gorges formées d'une part sur la périphérie de la surface cylindrique du bouton (5), d'autre part sur la surface périphérique interne de la jupe du bouton (5) et respectivement les parties inférieure (3) et supérieure (2) du corps contenant le conduit d'arrivée (10) et respectivement le conduit de sortie (11) et enfin par un joint (13) disposé entre le disque et le conduit de sortie (11) dans un perçage de plus grand diamètre (12) que le conduit de sortie (11) du fluide.

7. Installation de réglage du débit de distribution de fluides selon une des revendications 1 à 6, **caractérisée en ce que** l'étanchéité est assurée par deux joints toriques disposés l'un (111) entre le disque (6) et le conduit de sortie (11) et l'autre (101) entre le disque (6) et le conduit d'entrée (10), tous les deux dans des perçages de plus grand diamètre que leur conduits respectifs et en vis à vis des trous (70, 71) ou de la découpe (7) et de l'un (111) et de l'autre (101).

8. Installation de réglage du débit de distribution de fluides selon une des revendications précédentes, **caractérisée en ce que** le bouton (5) tournant est moleté sur sa périphérie extérieure et saillant sur au moins une face du corps (2, 3) pour permettre son entraînement manuel.

9. Installation de réglage du débit de distribution de fluides selon une des revendications précédentes, **caractérisée en ce que** le corps (2, 3) est réalisé en deux pièces en matière plastique moulées, enserrant au moins partiellement le bouton (5) et le disque (6).

10. Installation de réglage du débit de distribution de fluides selon une des revendications précédentes, **caractérisée en ce que** le disque (6) est de diamètre inférieur au bouton (5).
